# EUROPEAN PATENT APPLICATION

(11) **EP 3 902 099 A1**
(43) Date of publication of application: **27.10.2021**
(21) Application number: 20913086.3
(22) Date of filing: 27.07.2020
(51) Int. Cl.: H02J 50/10, H02M 1/44, H02J 50/70

(54) **WIRELESS POWER TRANSFER SYSTEM AND WIRELESS POWER RECEPTION DEVICE**

(71) Applicant: Mitsubishi Electric Engineering Company Limited, Chiyoda-ku, Tokyo 102-0073 (JP)
(72) Inventor: SAKAI, Kiohyde, Chiyoda-ku, Tokyo 102-0073 (JP)
(74) Representative: Hoffmann Eitle
(86) International application number: PCT/JP2020/028647
(87) International publication number: WO 2021/149283

(57) **Abstract**

A wireless power transmission device (1) includes a transmission power supply circuit (11) outputting sinusoidal power, and a resonance type transmission antenna (12) transmitting sinusoidal power. A wireless power reception device (2) includes a resonance type reception antenna (21) receiving sinusoidal power, and a reception power supply circuit (22) including a rectifier circuit (24) rectifying and smoothing sinusoidal power, and a waveform control circuit (23) provided between the reception antenna (21) and the rectifier circuit (24). The waveform control circuit (23) passes sinusoidal power and attenuates harmonic components included in non-sinusoidal power generated by a rectifying operation of the rectifier circuit (24).

## Description

### TECHNICAL FIELD

The present disclosure relates to wireless power transmission systems and wireless power reception devices.

### BACKGROUND ART

Conventionally, a technique for suppressing occurrence of impedance mismatch in a wireless power transmission system by controlling an impedance in the wireless power transmission system has been developed. This makes it possible to suppress generation of interference waves due to impedance mismatch. As a result, it is possible to prevent such interference waves from being radiated to the outside of the wireless power transmission system (see, for example, Patent Literature 1 or Patent Literature 2).

### CITATION LIST

### PATENT LITERATURES

Patent Literature 1: International Publication No. 2018/163406
Patent Literature 2: International Publication No. 2018/163408

### SUMMARY OF INVENTION

### TECHNICAL PROBLEM

The generation factor of interference waves in the wireless power transmission system is not limited to the impedance mismatch. Although the technique described in Patent Literature 1 or Patent Literature 2 (hereinafter referred to as the "conventional technique") can suppress the generation of interference waves due to impedance mismatch, there has been a problem that the generation of interference waves due to other factors cannot be suppressed. More specifically, there has been a problem that the generation of interference waves due to the following factors cannot be suppressed.

Hereinafter, an AC voltage having a sinusoidal or substantially sinusoidal time waveform is referred to as the "sinusoidal voltage". An AC current having a sinusoidal or substantially sinusoidal time waveform is referred to as the "sinusoidal current". Further, AC power corresponding to the sinusoidal voltage and the sinusoidal current is referred to as the "sinusoidal power". An AC voltage having a non-sinusoidal time waveform is referred to as the "non-sinusoidal voltage". An AC current having a non-sinusoidal time waveform is referred to as the "non-sinusoidal current". AC power corresponding to the non-sinusoidal voltage and the non-sinusoidal current is referred to as the "non-sinusoidal power".

Non-sinusoidal voltages and non-sinusoidal currents may be generated in at least some of lines included in a wireless power transmission system. That is, non-sinusoidal power may be generated in the at least some of lines. The non-sinusoidal power includes a fundamental wave component and also includes harmonic components with respect to the fundamental wave component. In this case, since the at least some of lines fulfill the function of an antenna for the harmonic components, the interference wave corresponding to the harmonic components is radiated. Further, since the antenna for wireless power transmission fulfills the function of the antenna for the harmonic components, the interference wave corresponding to the harmonic components is radiated. That is, an interference wave caused by harmonic components is generated. In the prior art, there has been a problem that the generation of such an interference wave cannot be suppressed.

The present disclosure has been made to solve the above-described problem, and has an object to suppress the generation of interference waves due to harmonic components included in non-sinusoidal power.

### SOLUTION TO PROBLEM

The wireless power transmission system according to the present disclosure includes a wireless power transmission device and a wireless power reception device. The wireless power transmission device includes: a transmission power supply circuit outputting sinusoidal power; and a transmission antenna being resonance type and transmitting the sinusoidal power. The wireless power reception device includes: a reception antenna being resonance type and receiving the sinusoidal power; and a reception power supply circuit including a rectifier circuit rectifying and smoothing the sinusoidal power and a waveform control circuit provided between the reception antenna and the rectifier circuit. The waveform control circuit passes the sinusoidal power and attenuates harmonic components included in non-sinusoidal power generated by a rectifying operation of the rectifier circuit.

The wireless power reception device according to the present disclosure includes a reception antenna being resonance type for receiving sinusoidal power, and a reception power supply circuit including a rectifier circuit for rectifying and smoothing the sinusoidal power and a waveform control circuit provided between the reception antenna and the rectifier circuit. The waveform control circuit passes the sinusoidal power and attenuates harmonic components included in non-sinusoidal power generated by a rectifying operation of the rectifier circuit.

### ADVANTAGEOUS EFFECTS OF INVENTION

According to the present disclosure, since it is configured as described above, it is possible to suppress generation of interference waves due to harmonic components included in non-sinusoidal power.

### BRIEF DESCRIPTION OF DRAWINGS

FIG. 1 is a block diagram showing a main part of a wireless power transmission system according to a first embodiment.
FIG. 2 is a block diagram showing a main part of a wireless power transmission device in the wireless power transmission system according to the first embodiment.
FIG. 3 is a block diagram showing a main part of a wireless power reception device in the wireless power transmission system according to the first embodiment.
FIG. 4 is a circuit diagram corresponding to a reception antenna, a waveform control circuit, and a rectifier circuit in the wireless power reception device in the wireless power transmission system according to the first embodiment.
FIG. 5 is an explanatory diagram showing a time waveform of a voltage in a connection line between the reception antenna and the waveform control circuit.
FIG. 6 is an explanatory diagram showing a time waveform of a current in a connection line between the reception antenna and the waveform control circuit.
FIG. 7 is an explanatory diagram showing a time waveform of a voltage in a connection line between the waveform control circuit and the rectifier circuit.
FIG. 8 is an explanatory diagram showing a time waveform of a current in a connection line between the waveform control circuit and the rectifier circuit.
FIG. 9 is an explanatory diagram showing a time waveform of a voltage in a connection line between the rectifier circuit and a power output I/F circuit.
FIG. 10 is an explanatory diagram showing a time waveform of a current in a connection line between the rectifier circuit and the power output I/F circuit.
FIG. 11 is another circuit diagram corresponding to the reception antenna, the waveform control circuit, and the rectifier circuit in the wireless power reception device in the wireless power transmission system according to the first embodiment.
FIG. 12 is another circuit diagram corresponding to the reception antenna, the waveform control circuit, and the rectifier circuit in the wireless power reception device in the wireless power transmission system according to the first embodiment.

### DESCRIPTION OF EMBODIMENTS

In order to explain this disclosure in more detail, a mode for carrying out the present disclosure will be described below with reference to the accompanying drawings.

### First Embodiment.

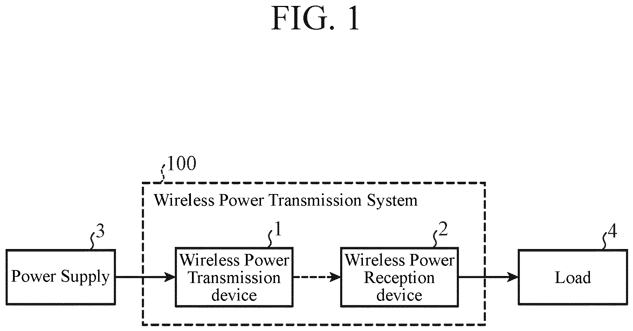

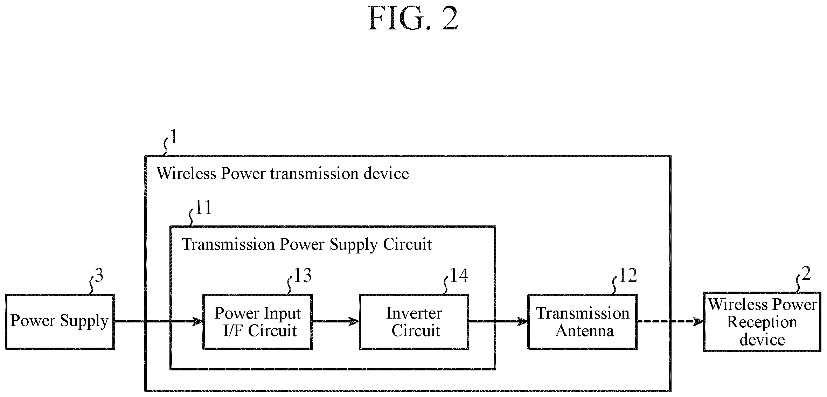

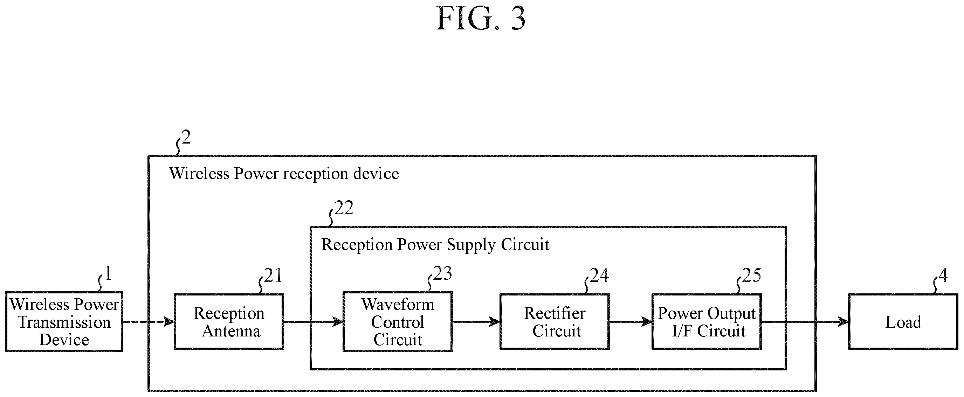

FIG. 1 is a block diagram showing a main part of a wireless power transmission system according to a first embodiment. FIG. 2 is a block diagram showing a main part of a wireless power transmission device in the wireless power transmission system according to the first embodiment. FIG. 3 is a block diagram showing a main part of the wireless power reception device in the wireless power transmission system according to the first embodiment. The wireless power transmission system according to the first embodiment will be described with reference to FIGS. 1 to 3.

As shown in FIG. 1, a wireless power transmission system 100 includes a wireless power transmission device 1 and a wireless power reception device 2. The wireless power transmission system 100 is provided between a power supply 3 and a load 4. More specifically, the wireless power transmission device 1 is provided between the power supply 3 and the wireless power reception device 2, and the wireless power reception device 2 is provided between the wireless power transmission device 1 and the load 4.

The power supply 3 is implemented by an AC power supply or a DC power supply. The load 4 includes, for example, a battery of a device to be supplied with power by the wireless power transmission system 100. Such a device is, for example, a moving object (industrial robot, electric wheelchair, electric vehicle, etc.). Note that the wireless power reception device 2 may be mounted on such a device.

As shown in FIG. 2, the wireless power transmission device 1 includes a transmission power supply circuit 11 and a transmission antenna 12. The transmission power supply circuit 11 includes a power input interface circuit (hereinafter referred to as the "power input I/F circuit") 13 and an inverter circuit 14. The transmission power supply circuit 11 is provided between the power supply 3 and the transmission antenna 12. More specifically, the power input I/F circuit 13 is provided between the power supply 3 and the inverter circuit 14, and the inverter circuit 14 is provided between the power input I/F circuit 13 and the transmission antenna 12.

The power input I/F circuit 13 is implemented by an AC-DC converter or a DC-DC converter. On the other hand, the inverter circuit 14 is implemented by a DC-AC converter. That is, the inverter circuit 14 is implemented by an inverter. More specifically, the inverter circuit 14 is implemented by a class E inverter. Therefore, the voltage output by the transmission power supply circuit 11 is a sinusoidal voltage having a predetermined frequency f₀. Further, the current output by the transmission power supply circuit 11 is a sinusoidal current having a frequency f₀. That is, the power output by the transmission power supply circuit 11 is sinusoidal power having a frequency f₀.

The frequency f₀ is set to a value based on a standard or regulation related to wireless power transmission. That is, the frequency f₀ is set to a different value depending on the application of the wireless power transmission system 100. Specifically, for example, the frequency f₀ is set to 6.78 MHz.

The power output by the transmission power supply circuit 11 is supplied to the transmission antenna 12. The transmission antenna 12 is implemented by a resonance type antenna. Specifically, for example, the transmission antenna 12 is implemented by a loop antenna having a spiral shape, a loop antenna having a helical shape, or a loop antenna having a solenoid shape. The transmission antenna 12 transmits the power supplied by the transmission power supply circuit 11. Here, the power output by the transmission power supply circuit 11 is sinusoidal power having a frequency f₀. Therefore, the power transmitted by the transmission antenna 12 is also sinusoidal power having the frequency f₀.

As shown in FIG. 3, the wireless power reception device 2 includes a reception antenna 21 and a reception power supply circuit 22. The reception power supply circuit 22 includes a waveform control circuit 23, a rectifier circuit 24, and a power output interface circuit (hereinafter referred to as the "power output I/F circuit") 25. The reception power supply circuit 22 is provided between the reception antenna 21 and the load 4. More specifically, the waveform control circuit 23 is provided between the reception antenna 21 and the rectifier circuit 24, the rectifier circuit 24 is provided between the waveform control circuit 23 and the power output I/F circuit 25, and the power output I/F circuit 25 is provided between the rectifier circuit 24 and the load 4.

The reception antenna 21 is implemented by a resonance type antenna. Specifically, for example, the reception antenna 21 is implemented by a loop antenna having a spiral shape, a loop antenna having a helical shape, or a loop antenna having a solenoid shape. The reception antenna 21 receives the power transmitted by the transmission antenna 12. Here, the power transmitted by the transmission antenna 12 is sinusoidal power having a frequency f₀. Therefore, the power received by the reception antenna 21 is also sinusoidal power having the frequency f₀.

In this way, wireless power transmission between the transmission antenna 12 and the reception antenna 21 is achieved. In the figures, each dashed arrow indicates such wireless power transmission. Such wireless power transmission may be any type. Specifically, for example, such wireless power transmission may be a so-called "magnetic field resonance type". Alternatively, for example, such wireless power transmission may be a so-called "electric field resonance type". Alternatively, for example, such wireless power transmission may be a so-called "electromagnetic induction type".

The waveform control circuit 23 passes sinusoidal power having a frequency f₀. Therefore, the power received by the reception antenna 21 passes through the waveform control circuit 23 and is supplied to the rectifier circuit 24. The rectifier circuit 24 rectifies the power received by the reception antenna 21. Further, the rectifier circuit 24 smooths the rectified power.

The smoothed power is supplied to the load 4 via the power output I/F circuit 25. The power output I/F circuit 25 is implemented by, for example, a step-down DC-DC converter. Therefore, the voltage output by the power output I/F circuit 25 is a DC voltage having a predetermined voltage value. Further, the current output by the power output I/F circuit 25 is a DC current having a predetermined current value.

Here, due to the rectifying operation of the rectifier circuit 24, non-sinusoidal power is generated in the line on the input side with respect to the rectifier circuit 24. The non-sinusoidal voltage in such non-sinusoidal power has, for example, a time waveform having a limited shape at the upper portion and the lower portion of the sinusoidal wave (that is, a substantially rectangular wave-shaped time waveform). On the other hand, the non-sinusoidal current in such non-sinusoidal power has, for example, a time waveform having a shape corresponding to the limited portion. However, the fundamental wave component in such non-sinusoidal power has a frequency f₁ equivalent to the frequency f₀. That is, such a fundamental wave component corresponds to sinusoidal power having a frequency f₀.

On the other hand, the harmonic components in such non-sinusoidal power have frequencies f₂ to f_{N} different from the frequency f₀. More specifically, such harmonic components have frequencies f₂ to f_{N} that are integral multiples of the frequency f₁. Here, N is an integer greater than or equal to 2. The highest frequency f_{N} among the frequencies f₂ to f_{N} is, for example, about 1 GHz. The waveform control circuit 23 attenuates such harmonic components. More specifically, the waveform control circuit 23 attenuates such harmonic components by reflecting and absorbing the harmonic components.

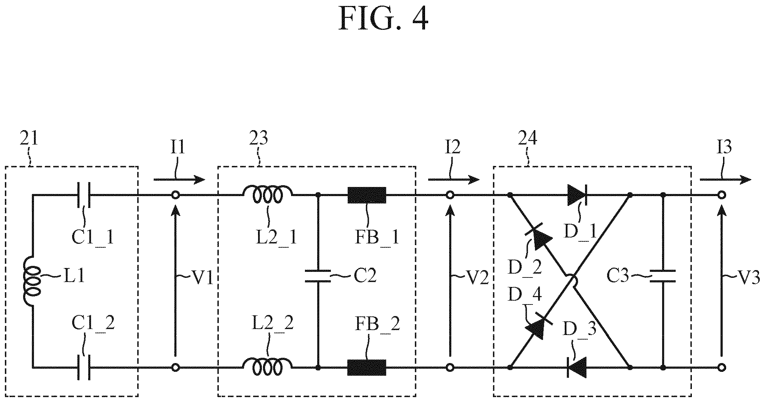

That is, the waveform control circuit 23 includes an inductive component and a capacitive component (hereinafter collectively referred to as the "LC component") for reflecting such harmonic components. Further, the waveform control circuit 23 includes a resistance component (hereinafter referred to as the "R component") for absorbing such harmonic components. The circuit configuration of the waveform control circuit 23 will be described later with reference to FIG. 4.

In this way, the main part of the wireless power transmission system 100 is configured.

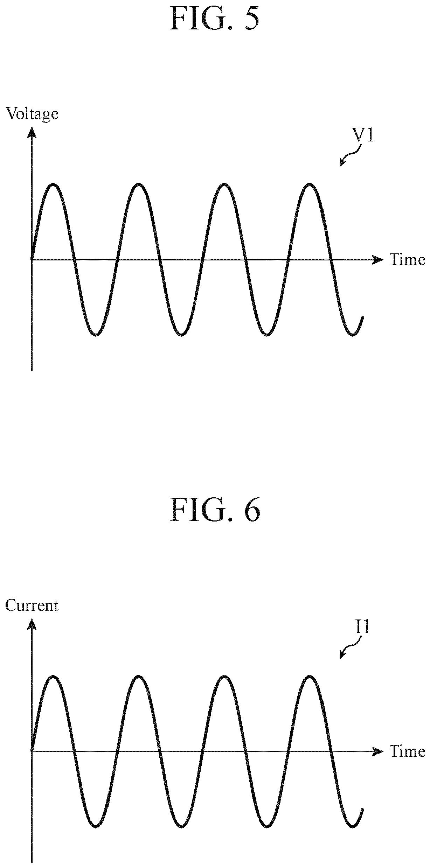

Next, the equivalent circuit of the reception antenna 21 will be described, and the circuit configuration of the waveform control circuit 23 and the circuit configuration of the rectifier circuit 24 will also be described with reference to FIG. 4. Further, the time waveforms of the voltages VI, V2, V3 in the wireless power reception device 2 will be described, and the time waveforms of the currents I1, I2, I3 in the wireless power reception device 2 will also be described with reference to FIGS. 5 to 10.

As shown in FIG. 4, the equivalent circuit of the reception antenna 21 includes one inductor L1. Further, the equivalent circuit of the reception antenna 21 includes a plurality of capacitors C1. More specifically, the equivalent circuit of the reception antenna 21 includes two capacitors C1_1 and C1_2.

As shown in FIG. 4, the waveform control circuit 23 includes a plurality of inductors L2. More specifically, the waveform control circuit 23 includes two inductors L2_1 and L2_2. Further, the waveform control circuit 23 includes one capacitor C2. Further, the waveform control circuit 23 includes a plurality of ferrite beads FB. More specifically, the waveform control circuit 23 includes two ferrite beads FB_1 and FB_2.

In the example shown in FIG. 4, the inductors L2_1 and L2_2 are provided in a preceding stage of the capacitor C2, and the ferrite beads FB_1 and FB_2 are provided in a subsequent stage of the capacitor C2. Further, regarding the connection state of each element (L2_1, L2 2, C2, FB_1, FB 2) in the waveform control circuit 23, the connection state of each inductor L2 is a serial connection, the connection state of the capacitor C2 is a shunt connection, and the connection state of each ferrite bead FB is a serial connection.

With these elements (L2_1, L2_2, C2, FB_1, FB 2), an LC component for reflection and an R component for absorption are implemented. In particular, the R component for absorption is implemented by each ferrite bead FB.

In other words, the specifications in the waveform control circuit 23 (including the induction value of each inductor L2, the capacitance value of the capacitor C2, the induction value of each ferrite bead FB, and the resistance value of each ferrite bead FB) are set to values capable of implementing reflection and absorption of harmonic components. In particular, the induction value of each inductor L2 and the capacitance value of the capacitor C2 are set to values capable of implementing reflection of harmonic components depending on the frequency f₀.

As shown in FIG. 4, the rectifier circuit 24 includes a plurality of diodes D. More specifically, the rectifier circuit 24 includes four diodes D_1, D_2, D_3, D_4. A diode bridge for rectification is composed of four diodes D_1, D_2, D_3, D_4. Further, the rectifier circuit 24 includes one capacitor C3. That is, a smoothing capacitor C3 is provided in a subsequent stage of the diode bridge for rectification.

In the figure, V1 shows the voltage in the connection line between the reception antenna 21 and the waveform control circuit 23. I1 indicates the current in the connection line between the reception antenna 21 and the waveform control circuit 23. V2 indicates the voltage in the connection line between the waveform control circuit 23 and the rectifier circuit 24. 12 indicates the current in the connection line between the waveform control circuit 23 and the rectifier circuit 24. V3 indicates the voltage in the connection line between the rectifier circuit 24 and the power output I/F circuit 25. 13 indicates the current in the connection line between the rectifier circuit 24 and the power output I/F circuit 25.

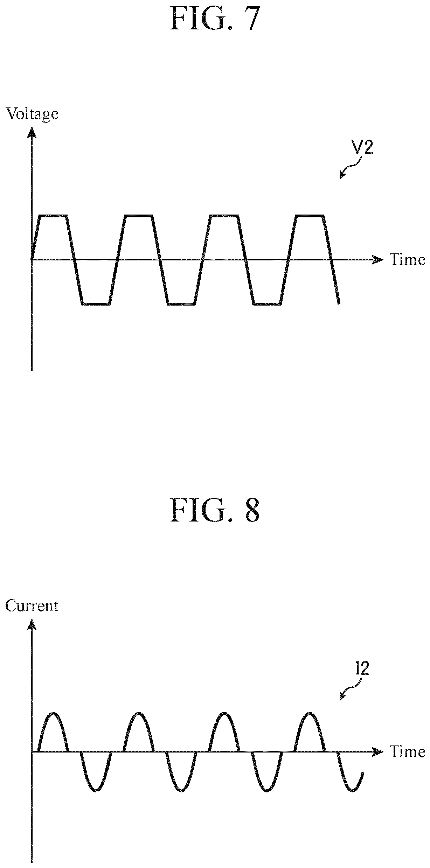

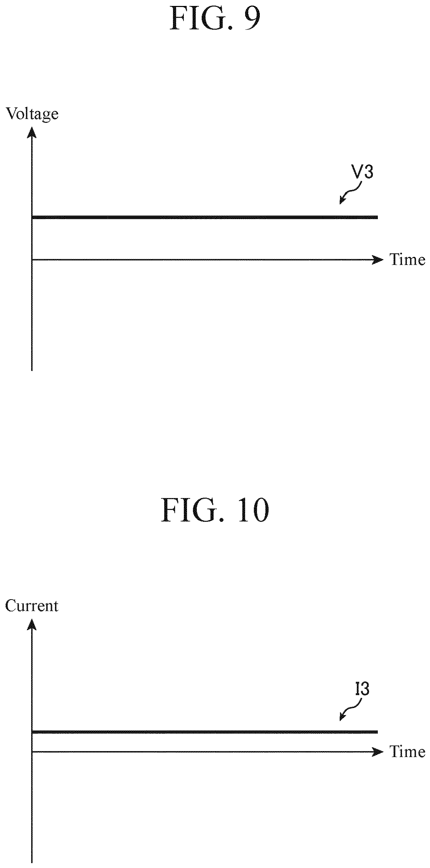

FIG. 5 shows a time waveform of the voltage V1. FIG. 6 shows a time waveform of the current I1. FIG. 7 shows a time waveform of the voltage V2. FIG. 8 shows a time waveform of the current 12. FIG. 9 shows a time waveform of the voltage V3. FIG. 10 shows a time waveform of the current 13.

As described above, due to the rectifying operation of the rectifier circuit 24, a non-sinusoidal voltage is generated, and a non-sinusoidal current is also generated in the line on the input side with respect to the rectifier circuit 24. Therefore, the time waveform of the voltage V2 is non-sinusoidal (see FIG. 7). The time waveform of the current 12 is also non-sinusoidal (see FIG. 8).

In this case, since the waveform control circuit 23 is provided, the harmonic power included in such non-sinusoidal power is reflected and absorbed. Therefore, although the time waveform of the voltage V2 is non-sinusoidal (see FIG. 7), the time waveform of the voltage V1 is sinusoidal (see FIG. 5). Further, although the time waveform of the current 12 is non-sinusoidal (see FIG. 8), the time waveform of the current I1 is sinusoidal (see FIG. 6).

That is, since the waveform control circuit 23 is provided, it is possible to avoid the generation of non-sinusoidal power in the connection line between the reception antenna 21 and the reception power supply circuit 22. This makes it possible to avoid the generation of interference waves due to the harmonic components included in such non-sinusoidal power. As a result, it is possible to prevent such interference waves from being radiated to the outside of the wireless power reception device 2.

However, in the connection line between the waveform control circuit 23 and the rectifier circuit 24, there is a possibility that interference waves are generated due to the harmonic components included in such non-sinusoidal power corresponding to the voltage V2 and the current 12. Therefore, the connection line between the waveform control circuit 23 and the rectifier circuit 24 may be provided with a member (hereinafter, referred to as the "electromagnetic wave shielding member") that functions as an electromagnetic wave shield for such connection line. This makes it possible to prevent such interference waves from being radiated to the outside of the wireless power reception device 2.

Note that, in some cases, the connection line between the waveform control circuit 23 and the rectifier circuit 24 is small so that the level of such interference waves is smaller than the required level. In such cases, such an electromagnetic wave shielding member is unnecessary.

Next, an effect of the wireless power transmission system 100 will be described.

First, a wireless power transmission system usually includes the lines explained below. That is, the wireless power transmission system includes a wired line (that is, a connection line) between the transmission power supply circuit and the transmission antenna, a wireless line between the transmission antenna and the reception antenna, and a wired line (that is, a connection line) between the reception antenna and the reception power supply circuit. Since non-sinusoidal power is generated in at least some of these lines, interference waves due to the harmonic components included in such non-sinusoidal power are generated.

Secondly, each of the transmission antenna and the reception antenna is usually implemented by a small loop antenna. When the above-described non-sinusoidal power is generated, these loop antennas tend to radiate interference waves corresponding to so-called the "normal mode noise". Such interference waves will have energy proportional to the fourth power of the corresponding frequency on the basis of the antenna gain.

Thirdly, when the distance between the transmission power supply circuit and the transmission antenna is large, a part of the connection line between the transmission power supply circuit and the transmission antenna is composed of a connection cable (for example, a coaxial cable). Further, when the distance between the reception antenna and the reception power supply circuit is large, a part of the connection line between the reception antenna and the reception power supply circuit is composed of a connection cable (for example, a coaxial cable). The so-called "common mode noise" may occur due to imbalances in the individual power supply circuits or in the individual connection lines. For this, the individual connection cables function as dipole antennas. Specifically, for example, the shielded wire of each coaxial cable functions as a dipole antenna. As a result, interference waves corresponding to the common mode noise are radiated. Such interference waves will have energy proportional to the square of the corresponding frequency.

Fourthly, when a wireless power reception device is mounted on a moving object, it is impossible or difficult to achieve electrical grounding (hereinafter referred to as the "GND"). Further, in this case, when GND is achieved, the ground resistance is large. Therefore, when the above-mentioned normal mode noise is generated, such normal mode noise is easily converted into the common mode noise. As a result, interference waves corresponding to the above-mentioned common mode noise are likely to be radiated.

Fifthly, by providing an electromagnetic wave shielding member that covers the entire wireless power transmission system, it is possible to prevent the above-mentioned interference waves from being radiated to the outside. However, in the wireless power transmission system, it is impossible or difficult to provide such an electromagnetic wave shielding member due to its nature. In particular, when there is a space between the wireless power transmission device and the wireless power reception device, it is impossible or difficult to provide an electromagnetic wave shielding member that covers such a space.

On the other hand, in the wireless power transmission system 100, a class E inverter is used in the inverter circuit 14 of the transmission power supply circuit 11. Further, the waveform control circuit 23 is provided in the reception power supply circuit 22. As a result, the power in the connection line between the transmission power supply circuit 11 and the transmission antenna 12 can be made to be sinusoidal power. Further, the power in the wireless line between the transmission antenna 12 and the reception antenna 21 can be made to be sinusoidal power. Moreover, the power in the connection line between the reception antenna 21 and the reception power supply circuit 22 can be made to be sinusoidal power.

In other words, it is possible to avoid the generation of non-sinusoidal power in these lines. This makes it possible to avoid the generation of interference waves due to the harmonic components included in such non-sinusoidal power. As a result, it is possible to prevent such interference waves from being radiated to the outside of the wireless power transmission system 100. Further, in order to prevent such interference waves from being radiated to the outside of the wireless power transmission system 100, it is possible to eliminate the need for an electromagnetic wave shielding member that covers the entire wireless power transmission system 100.

Note that, as described above, it is preferable to provide such an electromagnetic wave shielding member for the connection line between the waveform control circuit 23 and the rectifier circuit 24. Such an electromagnetic wave shielding member is sufficiently smaller than the electromagnetic wave shielding member that covers the entire wireless power transmission system 100. Further, it is not necessary for such an electromagnetic wave shielding member to cover the space between the wireless power transmission device 1 and the wireless power reception device 2. Therefore, such an electromagnetic wave shielding member can be easily provided.

Next, a modified example of the wireless power reception device 2 will be described. More specifically, a modified example of the waveform control circuit 23 will be described.

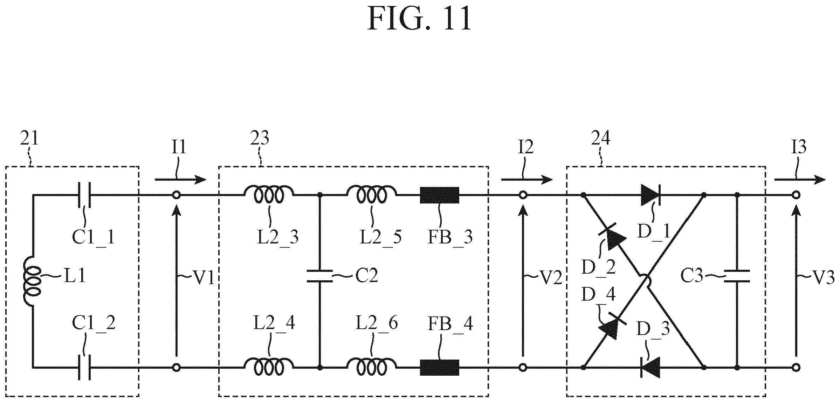

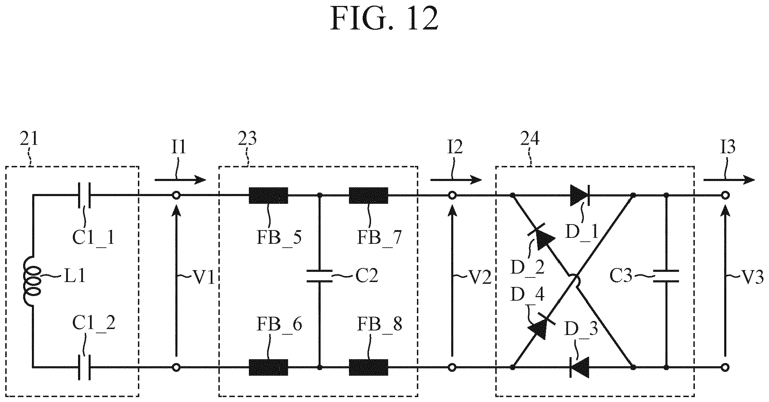

The circuit configuration of the waveform control circuit 23 is not limited to the specific example shown in FIG. 4. It is sufficient that the waveform control circuit 23 includes at least an R component for absorption, and more preferably, it is sufficient that it includes an LC component for reflection and an R component for absorption. For example, the circuit configuration of the waveform control circuit 23 may be as shown in FIG. 11. Alternatively, the circuit configuration of the waveform control circuit 23 may be as shown in FIG. 12.

In the example shown in FIG. 11, the waveform control circuit 23 includes a plurality of inductors L2. More specifically, the waveform control circuit 23 includes four inductors L2_3, L2_4, L2_5, L2_6. Further, the waveform control circuit 23 includes one capacitor C2. Further, the waveform control circuit 23 includes a plurality of ferrite beads FB. More specifically, the waveform control circuit 23 includes two ferrite beads FB_3, FB_4.

In the example shown in FIG. 11, inductors L2_3, L2_4 are provided in the preceding stage of the capacitor C2, and inductors L2_5, L2_6 are provided in the subsequent stage of the capacitor C2. Further, ferrite beads FB_3, FB_4 are provided in the subsequent stage of the inductors L2_5, L2_6. Regarding the connection state of each element (L2_3, L2_4, L2_5, L2_6, C2, FB_3, FB_4) in the waveform control circuit 23, the connection state of each inductor L2 is a serial connection, the connection state of the capacitor C2 is a shunt connection, and the connection state of each ferrite bead FB is a serial connection.

With these elements (L2_3, L2_4, L2_5, L2_6, C2, FB_3, FB_4), the LC component for reflection and the R component for absorption are implemented. In particular, the R component for absorption is implemented by each ferrite bead FB. By using the waveform control circuit 23 shown in FIG. 11, it is possible to adjust the time waveform of the voltage V2 and adjust the time waveform of the current 12 as compared with the case of using the waveform control circuit 23 shown in FIG. 4.

In the example shown in FIG. 12, the waveform control circuit 23 includes one capacitor C2. Further, the waveform control circuit 23 includes a plurality of ferrite beads FB. More specifically, the waveform control circuit 23 includes four ferrite beads FB_5, FB_6, FB_7, FB_8.

In the example shown in FIG. 12, the ferrite beads FB_5, FB_6 are provided in the preceding stage of the capacitor C2, and the ferrite beads FB_7, FB_8 are provided in the subsequent stage of the capacitor C2. Regarding the connection state of each element (C2, FB_5, FB_6, FB_7, FB_8) in the waveform control circuit 23, the connection state of the capacitor C2 is a shunt connection, and the connection state of each ferrite bead FB is a serial connection.

With these elements (C2, FB_5, FB_6, FB_7, FB_8), the LC component for reflection and the R component for absorption are implemented. In particular, the R component for absorption is implemented by each ferrite bead FB. By using the waveform control circuit 23 shown in FIG. 12, it is possible to reduce fluctuations in the characteristics of the waveform control circuit 23 with respect to impedance fluctuations as compared with the case of using the waveform control circuit 23 shown in FIG. 4.

Next, another modified example of the wireless power reception device 2 will be described. More specifically, a modified example of the rectifier circuit 24 will be described.

The circuit configuration of the rectifier circuit 24 is not limited to the specific examples shown in FIGS. 4, 11 and 12. That is, the rectifier circuit 24 is not limited to the one using the diode bridge rectifier circuit. For example, the rectifier circuit 24 may be implemented by a diode rectifier circuit of another type instead of the diode bridge rectifier circuit. Alternatively, for example, the rectifier circuit 24 may be implemented by a rectifier circuit of synchronous rectification type including a field effect transistor instead of the diode bridge rectifier circuit.

As described above, the wireless power transmission system 100 according to the first embodiment includes a wireless power transmission device 1 and a wireless power reception device 2. The wireless power transmission device 1 includes a transmission power supply circuit 11 for outputting sinusoidal power and a transmission antenna 12 being resonance type for transmitting sinusoidal power. The wireless power reception device 2 includes a reception antenna 21 being resonance type for receiving the sinusoidal power and a reception power supply circuit 22 including a rectifier circuit 24 for rectifying and smoothing sinusoidal power, and a waveform control circuit 23 provided between the reception antenna 21 and the rectifier circuit 24. The waveform control circuit 23 passes the sinusoidal power and attenuates harmonic components included in non-sinusoidal power generated by the rectifying operation of the rectifier circuit 24. As a result, in the wireless power transmission system 100, it is possible to suppress the generation of interference waves due to the harmonic components included in the non-sinusoidal power.

Further, the waveform control circuit 23 attenuates the harmonic components by reflection and absorption of the harmonic components. Thereby, for example, the waveform control circuit 23 having the circuit configuration shown in FIG. 4, the circuit configuration shown in FIG. 11, or the circuit configuration shown in FIG. 12 can be used.

Further, the waveform control circuit 23 includes an LC component for the reflection and an R component for the absorption. Thereby, for example, the waveform control circuit 23 having the circuit configuration shown in FIG. 4, the circuit configuration shown in FIG. 11, or the circuit configuration shown in FIG. 12 can be used.

Further, the wireless power reception device 2 includes an electromagnetic wave shielding member for a connection line between the waveform control circuit 23 and the rectifier circuit 24. As a result, it is possible to prevent the interference waves caused by the harmonic components included in the non-sinusoidal power generated in the connection line from being radiated to the outside of the wireless power reception device 2.

Further, the transmission power supply circuit 11 includes an inverter circuit 14, and the inverter circuit 14 is implemented by a class E inverter. As a result, the transmission power supply circuit 11 that outputs sinusoidal power can be achieved.

Further, the wireless power reception device 2 according to the first embodiment includes a reception antenna 21 being resonance type for receiving sinusoidal power, and a reception power supply circuit 22 including a rectifier circuit 24 for rectifying and smoothing sinusoidal power, and a waveform control circuit 23 provided between the reception antenna 21 and the rectifier circuit 24. The waveform control circuit 23 passes the sinusoidal power and attenuates harmonic components included in non-sinusoidal power generated by the rectifying operation of the rectifier circuit 24. As a result, in the wireless power reception device 2, it is possible to suppress the generation of interference waves due to the harmonic components included in the non-sinusoidal power.

It should be noted that, in the invention of the present application, it is possible to modify any of the constituent elements of the embodiment or omitting any of the constituent elements of the embodiment within the scope of the invention.

### INDUSTRIAL APPLICABILITY

The wireless power reception device according to the present disclosure can be used in a wireless power transmission system. The wireless power transmission system according to the present disclosure can be used, for example, to supply electric power to a moving object.

### REFERENCE SIGNS LIST

1: wireless power transmission device, 2: wireless power reception device, 3: power supply, 4: load, 11: transmission power supply circuit, 12: transmission antenna, 13: power input interface circuit (power input I/F circuit), 14: inverter circuit, 21: reception antenna, 22: reception power supply circuit, 23: waveform control circuit, 24: rectifier circuit, 25: power output interface circuit (power output I/F circuit), 100: wireless power transmission system.

## Claims

1. A wireless power transmission system comprising a wireless power transmission device and a wireless power reception device, wherein
the wireless power transmission device includes:
a transmission power supply circuit outputting sinusoidal power; and
a transmission antenna being resonance type and transmitting the sinusoidal power,
the wireless power reception device includes:
a reception antenna being resonance type and receiving the sinusoidal power; and
a reception power supply circuit including a rectifier circuit rectifying and smoothing the sinusoidal power and a waveform control circuit provided between the reception antenna and the rectifier circuit, and
the waveform control circuit passes the sinusoidal power and attenuates harmonic components included in non-sinusoidal power generated by a rectifying operation of the rectifier circuit.

2. The wireless power transmission system according to claim 1, wherein the waveform control circuit attenuates the harmonic components by reflection and absorption of the harmonic components.

3. The wireless power transmission system according to claim 2, wherein the waveform control circuit includes an LC component for the reflection and an R component for the absorption.

4. The wireless power transmission system according to claim 3, wherein
the waveform control circuit includes a plurality of inductors, one capacitor, and a plurality of ferrite beads, and
the LC component and the R component are implemented by the plurality of inductors, the one capacitor, and the plurality of ferrite beads.

5. The wireless power transmission system according to claim 4, wherein
the plurality of inductors include two inductors,
the plurality of ferrite beads include two ferrite beads,
the two inductors are provided in a preceding stage of the one capacitor, and
the two ferrite beads are provided in a subsequent stage of the one capacitor.

6. The wireless power transmission system according to claim 4, wherein
the plurality of inductors include four inductors,
the plurality of ferrite beads include two ferrite beads,
two of the four inductors are provided in a preceding stage of the one capacitor,
the other two of the four inductors are provided in a subsequent stage of the one capacitor, and
the two ferrite beads are provided in a subsequent stage of the other two inductors.

7. The wireless power transmission system according to claim 3, wherein
the waveform control circuit includes one capacitor and a plurality of ferrite beads, and
the LC component and the R component are implemented by the one capacitor and the plurality of ferrite beads.

8. The wireless power transmission system according to claim 7, wherein
the plurality of ferrite beads include four ferrite beads,
two of the four ferrite beads are provided in a preceding stage of the one capacitor, and
the other two of the four ferrite beads are provided in a subsequent stage of the one capacitor.

9. The wireless power transmission system according to any one of claims 1 to 8, wherein the wireless power reception device includes an electromagnetic wave shielding member for a connection line between the waveform control circuit and the rectifier circuit.

10. The wireless power transmission system according to any one of claims 1 to 8, wherein
the transmission power supply circuit includes an inverter circuit, and
the inverter circuit is implemented by using a class E inverter.

11. The wireless power transmission system according to any one of claims 1 to 8, wherein wireless power transmission between the transmission antenna and the reception antenna is implemented by a magnetic field resonance.

12. The wireless power transmission system according to any one of claims 1 to 8, wherein wireless power transmission between the transmission antenna and the reception antenna is implemented by an electric field resonance.

13. The wireless power transmission system according to any one of claims 1 to 8, wherein wireless power transmission between the transmission antenna and the reception antenna is implemented by an electromagnetic induction.

14. A wireless power reception device, comprising:
a reception antenna being resonance type and receiving sinusoidal power; and
a reception power supply circuit including a rectifier circuit rectifying and smoothing the sinusoidal power and a waveform control circuit provided between the reception antenna and the rectifier circuit, wherein
the waveform control circuit passes the sinusoidal power and attenuates harmonic components included in non-sinusoidal power generated by a rectifying operation of the rectifier circuit.
